# EUROPEAN PATENT SPECIFICATION

(11) **EP 1 100 708 B1**
(45) Date of publication and mention of the grant of the patent: **08.08.2007**
(21) Application number: 99930521.2
(22) Date of filing: 22.06.1999
(51) Int. Cl.: B62D 1/04, F16B 2/14, B62D 1/10, F16D 1/06

(54) **STEERING WHEEL ATTACHMENT APPARATUS**
LENKRADBEFESTIGUNG
APPAREIL DE FIXATION DE VOLANT DE DIRECTION

(30) Priority: 25.07.1998 US 122567
(43) Date of publication of application: 23.05.2001
(73) Proprietor: KEY SAFETY SYSTEMS, INC., Sterling Heights, MI 48314 (US)
(72) Inventor: XU, Xiao, Ping, Troy, MI 48098 (US); BANKS, Eric, A., Utica, MI 48317 (US)
(74) Representative: Croston, David
(86) International application number: PCT/US1999/014028
(87) International publication number: WO 2000/006440

(56) References cited:
- EP-A- 0 648 661
- DE-A- 19 729 688
- US-A- 1 489 264
- US-A- 3 438 664
- US-A- 5 588 337
- US-A- 5 768 948
- US-A- 5 816 112

## Description

The present invention relates to an apparatus for attaching a steering wheel to a steering column.

Typically, a steering wheel and a steering column do not come as a pre-assembled unit. Thus, it is necessary to provide an apparatus for attaching the steering wheel to the steering column. Past attachment mechanisms have not been entirely satisfactory. In addition, the inclusion of airbag systems with steering wheels in an integrated steering wheel airbag system does not permit the use of traditional methods for attaching a steering wheel to a steering column. In an integrated steering wheel airbag system the airbag portion of the system is mounted into the steering wheel prior to attachment of the steering wheel to the steering column.

One difficulty with the use of past attachment mechanisms with an integrated steering wheel airbag system is that the traditional attachment mechanism is not accessible when an airbag module is mounted to the steering wheel. A second difficulty with past attachment mechanisms has been the requirement for complex tools to attach and to remove the steering wheel from the steering column. Finally, past methods have been very costly and have experienced difficulty in fitting the attachment apparatus within the allowable space.

Thus, it is desirable to provide an attachment apparatus that permits a user to reproducibly secure a steering wheel to a steering column whether an airbag module is mounted to the steering wheel or not. It is furthermore desirable to provide an apparatus that is simpler in design than current attachment mechanisms.

EP0648661 shows a piece for securing a steering column to a steering wheel which piece may include sloping upper and lower surfaces to provide a wedge fit.

In accordance with the invention, there is provided an apparatus for attaching a steering wheel to a steering column, said apparatus comprising:
a steering wheel armature having a collar, said collar adapted to receive a steering column; a wedge having a slot and a ramped portion adjacent said slot, said slot adapted to receive a slot portion of a steering column, said ramped portion adapted to contact a flange on a steering column;
   said wedge movable relative to said steering wheel armature between an unlocked position and a locked position; and
said wedge adapted to form a wedge lock between said collar and a steering column when said wedge is at said locked position (see EP 0 648 661), characterised in that the apparatus further comprises a wedge guide arranged to ensure that the wedge moves in a linear fashion between the unlocked and locked positions.

### BRIEF DESCRIPTION OF THE DRAWINGS

FIG. 1 is an exploded view of one embodiment of a steering wheel attachment apparatus designed according to the present invention.
FIG. 2 is a side view of one embodiment of a steering column designed according to the present invention.
FIG. 3 is a side view of one embodiment of a wedge and a fastener designed according to the present invention.
FIG. 4 is a top plan view of the wedge shown in FIG. 3.
FIG. 5 is an exploded partial cross sectional view of the embodiment shown in FIG. 1 with the wedge at an unlocked position.
FIG. 6 is a partial cross sectional view of the embodiment shown in FIG. 1 fully assembled with the wedge at a locked position.
FIG. 7 is an exploded view of another embodiment of a steering wheel attachment apparatus and a steering column designed according to the present invention.
FIG. 8 is a partial cross sectional view of the embodiment shown in FIG. 7 with a wedge at an unlocked position.
FIG. 9 is a partial cross sectional view of the embodiment shown in FIG. 7 fully assembled with the wedge at a locked position.

### DETAILED DESCRIPTION OF THE INVENTION

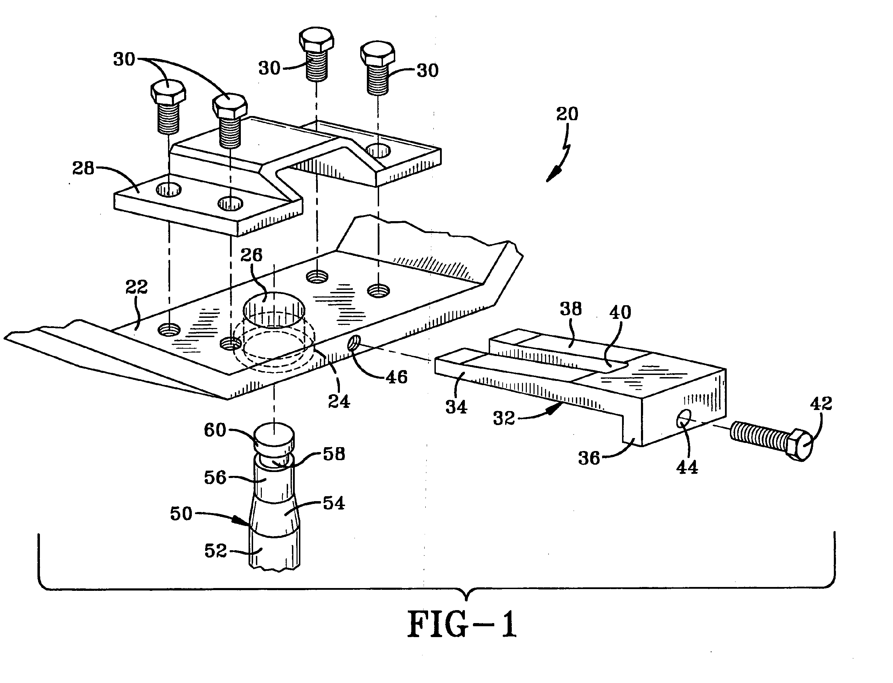

An attachment apparatus 20 designed according to the present invention is shown in FIG. 1. A steering wheel armature 22 includes a collar 24, shown in phantom, having an aperture 26. As is known in the art, the steering wheel armature 22 is generally connected to a plurality of spokes (not shown) and a steering wheel rim (not shown) to form the steering wheel. Preferably, the steering wheel armature 22 is a part of an integrated steering wheel. As used herein and in the claims an integrated steering wheel is understood to be a steering wheel in which an airbag module is mounted into the steering wheel prior to attachment of the steering wheel to the steering column. A wedge bracket 28 is secured by a plurality of bolts 30 to the steering wheel armature 22. The wedge bracket 28 could also be secured to steering wheel armature 22 by other methods known in the art such as, for example, welding. The wedge bracket 28 overlays a collar 24. Preferably, the collar 24 is integral with and formed from the steering wheel armature 22.

The attachment apparatus 20 further includes a wedge 32. The wedge 32 preferably is an L-shaped wedge having a long leg 34 and a short leg 36. A ramped portion 38 is located on the upper surface of the long leg 34. A slot 40 is formed in the long leg 34 of the wedge 32. The ramped portion 38 surrounds a slot 40. A fastener 42 extends through the hole 44 and into a threaded hole 46 to secure the wedge 32 to the steering wheel armature 22. Preferably, the fastener 42 comprises a threaded bolt as is shown in FIG. 1.

A steering column 50 is adapted to extend through the collar 24 by means of an aperture 26 in the steering wheel armature 22. The steering column 50 has a lower section 52, a tapered portion 54, and an upper section 56. A slot portion 58 and a flange 60 are located on the steering column 50 above upper section 56. The width of the slot portion 58 is designed to be slightly less than the width of the slot 40. Thus, the slot portion 58 can be accommodated in the slot 40.

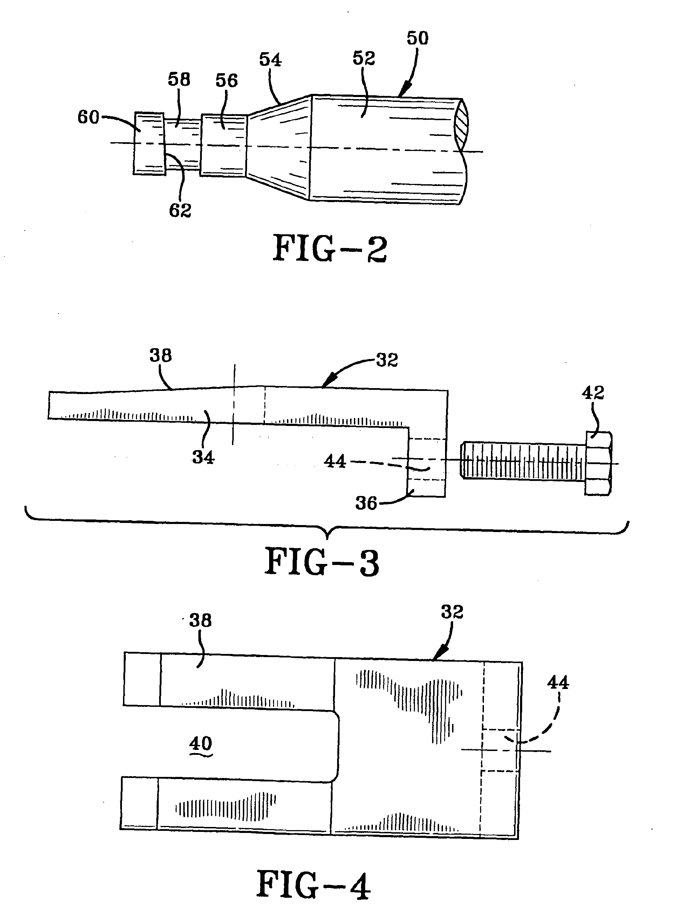

FIG. 2 is a side view of the steering column 50. The flange 60 includes a ramped surface 62 adjacent the slot portion 58. The angle of the ramped surface 62 preferably is nearly identical to the slope of the ramped portion 38 of the wedge 32. The diameter of lower section 52 is larger than the diameter of the aperture 26 in the collar 24. The diameter of the upper section 56 is less than the diameter of the aperture 26 in the collar 24.

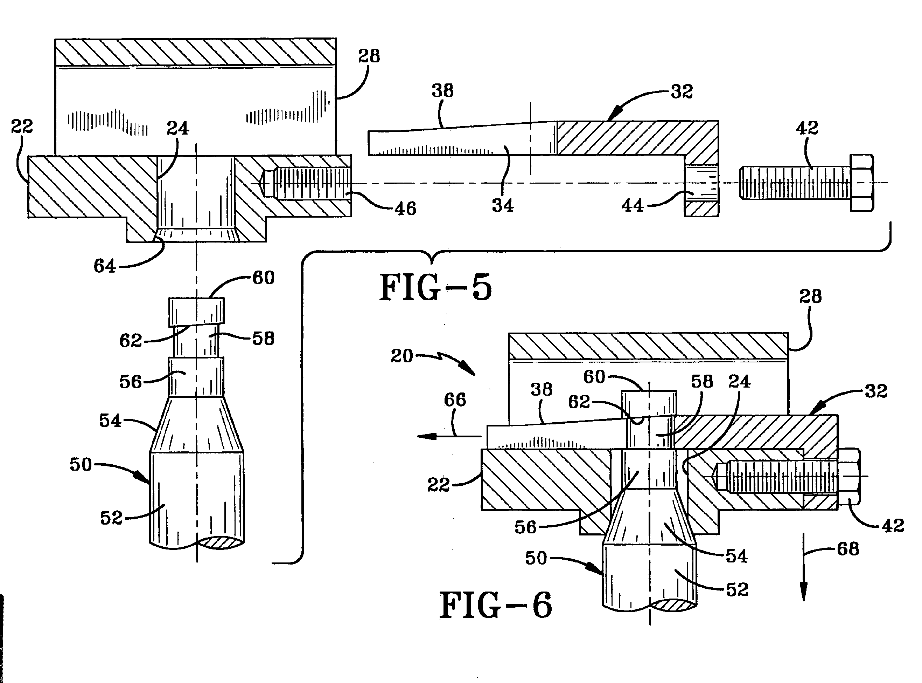

FIG. 3 is a side view of a wedge 32 and a fastener 42. FIG. 4 is a top plan view of the wedge 32. As shown in FIGS. 3 and 4, a slot 40 extends the length of the ramped portion 38.

FIG. 5 is an exploded partial cross-sectional view of the attachment apparatus 20 with the wedge 32 at an unlocked position. Optionally, the collar 24 includes an inner taper 64 having a slope nearly identical to that of the tapered portion 54. As would be understood by one of ordinary skill in the art, the collar 24 need not include the inner taper 64.

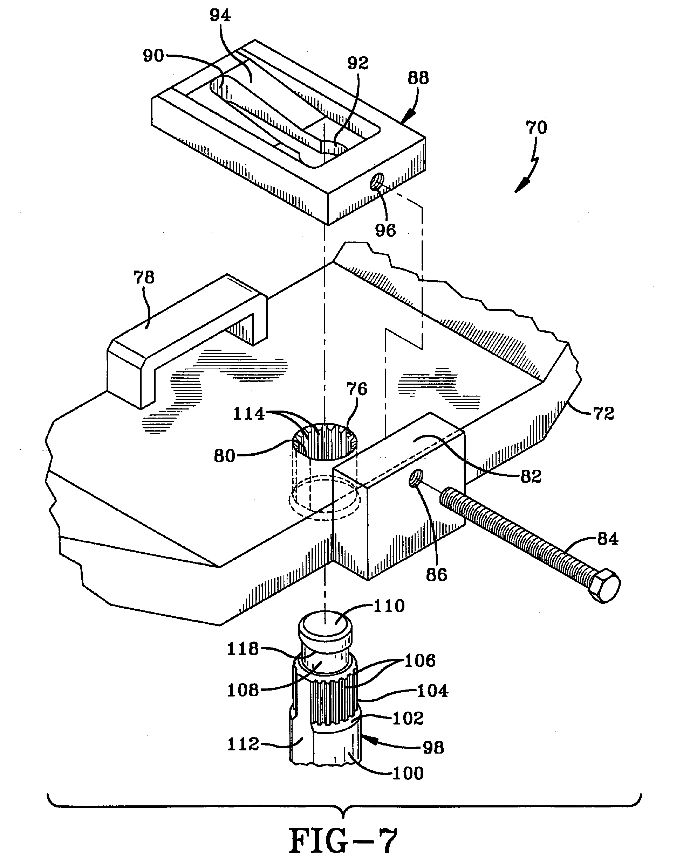

FIG. 6 is a partial cross-sectional side view of attachment the apparatus 20 with the wedge 32 at a locked position. In assembling the attachment apparatus 70, the first step is to place the steering wheel armature 22 with the attached wedge bracket 28 onto the steering column 50. The Steering column 50 extends through the collar 24. Second, the wedge 32 is placed onto the steering wheel armature 22 and slot the 40 is aligned to accommodate the slot portion 58. In this position, the wedge 32 is in the unlocked position. Third, the wedge 32 is driven in the direction of arrow 66. As the wedge 32 is driven in the direction of arrow 66, the ramped surface 62 of flange 60 rides up the ramped portion 38 of the wedge 32. At the same time, the steering wheel armature 22 is driven in the direction of arrow 68. This movement drives the inner taper 64 against the tapered portion 54 of the steering column 50. When the wedge 32 is at the locked position, as shown in FIG. 6, the ramped surface 62 is near an upper end of ramped portion 38 and the short leg 36 of wedge 32 is nearly flush against the steering wheel armature 22. At the locked position, the wedge 32 forms a wedge lock between the collar 24 and the tapered portion 54 of the steering column 50. The wedge lock forms because the diameter of lower section 52 is larger than the diameter of collar 24, thus the inner taper 64 wedges against the tapered portion 54. Fourth, the fastener 42 is inserted through the hole 44 and the threaded hole 46 to secure the wedge 32 to the steering wheel armature 22. Thus, the steering wheel armature 22 is secured to the steering column 50.

In disassembling the attachment apparatus 20, first, the fastener 42 is removed. Second, the wedge 32 is driven in a direction opposite to that of arrow 66. Third, to disengage the wedge lock between the collar 24 and the tapered portion 54, the long leg 34 is placed between the top of flange 60 and the wedge bracket 28 and the wedge 32 is then driven in the direction of arrow 66. Driving the wedge 32 in the direction of arrow 66 disengages the collar 24 from the tapered portion 54.

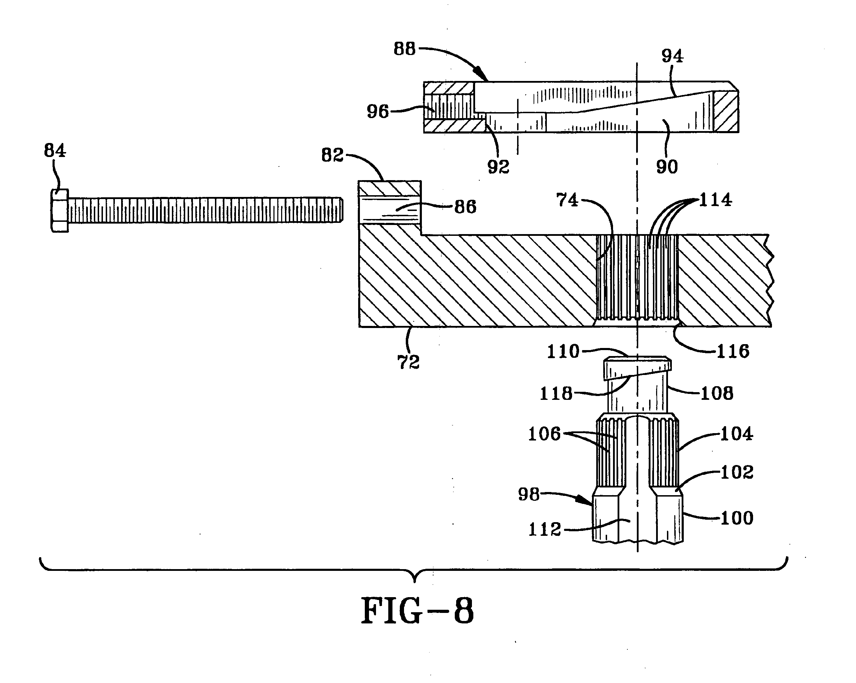

A second embodiment of an attachment apparatus 70 is shown in FIG. 7. A steering wheel armature 72 includes a collar 74 having an aperture 76. As noted above, the steering wheel armature 72 is generally connected to a plurality of spokes (not shown) and an upper steering wheel rim (not shown) to form the steering wheel. Preferably, the steering wheel armature 72 is a part of an integrated steering wheel. A wedge guide 78 is attached to the steering wheel armature 72. The wedge guide 78 may also be integral with the steering wheel armature 72. The collar 74 preferably includes an index surface 80. A drive bracket 82 is located on the steering wheel armature 72 opposite the wedge guide 78. A drive bolt 84 is adapted to extend through an aperture 86 in the drive bracket 82. The aperture 86 is oversized to permit the drive bolt 84 to move freely in an axial direction through the aperture 86.

A wedge 88 is designed to fit between the wedge guide 78 and the steering wheel armature 72. The wedge 88 includes a slot 90 that is connected to an aperture 92. A ramped portion 94 surrounds the slot 90. The wedge 88 further includes a drive bolt aperture 96 for receiving the drive bolt 84. The aperture 96 is threaded to accept the drive bolt 84.

A steering column 98 is adapted to extend through the collar 74. The steering column 98 includes a lower section 100 adjacent a tapered portion 102, which is adjacent an upper section 104. The diameter of the lower section 100 is larger than the diameter of the collar 74. A plurality of splines 106 are located on the upper section 104. A slot portion 108 of the steering column 98 is located adjacent the upper section 104. A flange 110 is located adjacent the slot portion 108. An index surface 112 is located on the upper section 104. The contour of the index surface 112 permits it to fit against the index surface 80. Thus, the index surface 80 and the index surface 112 serve to orient the steering wheel armature 72 relative to the steering column 98. The flange 110 is adapted to pass through the aperture 82. The slot portion 108 has a width that is less than the width of the slot 90, thus slot portion 108 can fit into slot 90.

FIG. 8 is a partial cross-sectional view of the embodiment shown in FIG. 7 with the wedge 88 at an unlocked position. The collar 74 further includes a plurality of keyways 114 that are complimentary to splines 106 on the steering column 98. As will be understood by one of ordinary skill in the art, alternatively, the splines 106 could be located within the collar 74 and the keyways 114 could be located on the steering column 98. The splines 106, keyways 114, and the index surfaces 80 and 112 all serve to orient the steering wheel armature 72 relative to the steering column 98 and serve as anti-rotation mechanisms. The splines 106 and keyways 114 could be replaced by other anti-rotation mechanisms such as, for example, a double-D system of two sets of matching flat index surfaces, or the steering column 98 and collar 74 could have a non circular shape such as, for example, a hexagonal shape. When the steering column 98 extends through the collar 74, the splines 106 and keyways 114 prevent rotation of the steering wheel armature 72 independently from the steering column 98. Preferably, the collar 74 includes a taper 116 having a slope that is substantially similar to that of the tapered portion 102. The flange 110 further includes a ramped surface 118. Preferably, the slope of the ramped surface 118 matches that of the ramped portion 94.

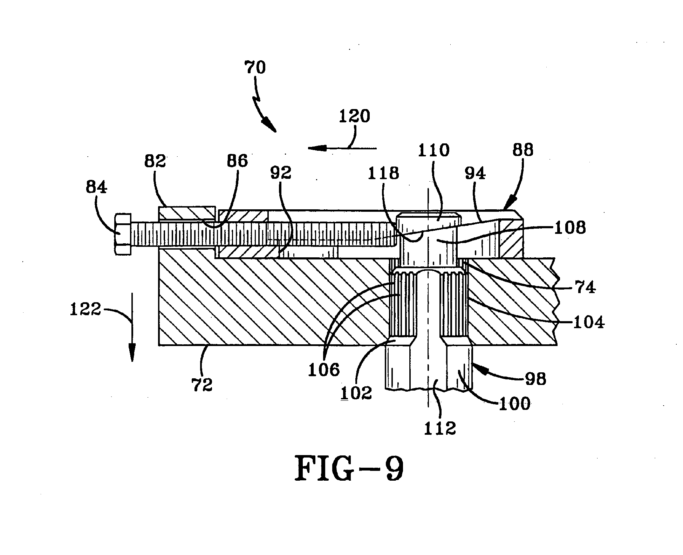

In FIG. 9, the attachment apparatus 70 is shown fully assembled. The wedge 88 is shown at a locked position. The steps of assembly of the attachment apparatus 70 are as follows. First, the wedge 88 is placed on the steering wheel armature 72 with the aperture 92 centered over collar 74. Second, the drive bolt 84 is inserted through the aperture 86 and threaded into the drive bolt aperture 96. Third, the steering wheel armature 72 is placed onto the steering column 98, with the slot portion 108 and the flange 110 extending through the aperture 92 in the wedge 88. The indexed surfaces 112 and 80 are aligned with each other as are the keyways 114 and the splines 106. Fourth, the drive bolt 84 is rotated until it contacts the flange 110. Further rotation of the drive bolt 84 moves the wedge 88 in the direction of arrow 120. As the drive bolt 84 is further rotated, the ramped surface 118 rides up the ramped portion 94 of the wedge 88. Further rotation of the drive bolt 84 drives the steering wheel armature 72 in the direction of arrow 122 to force the collar 74 against the tapered portion 102. Preferably, the drive bolt 84 is rotated to a pre-determined torque to provide a reproducible and secure attachment of the steering wheel armature 72 to the steering column 98. At the pre-determined torque, a wedge-like lock is formed between the collar 74 and the tapered portion 102 and the wedge 88 is at the locked position.

In disassembling the attachment apparatus 70, the first step is removal of the drive bolt 84. Second, the wedge 88 is driven from underneath the flange 110. Third, the steering wheel armature 72 is driven in a direction opposite arrow 122 to disengage the wedge-like lock between the collar 74 and the tapered portion 102.

## Claims

1. An apparatus (20) for attaching a steering wheel to a steering column (50), said apparatus comprising:
a steering wheel armature (22) having a collar (24), said collar adapted to receive a steering column; a wedge (32) having a slot (40) and a ramped portion (38) adjacent said slot, said slot adapted to receive a slot portion (108) of a steering column, said ramped portion adapted to contact a flange (110) on a steering column;
said wedge movable relative to said steering wheel armature between an unlocked position and a locked position; and
said wedge adapted to form a wedge lock between said collar and a steering column when said wedge is at said locked position, **characterised in that** the apparatus further comprises a wedge guide (78) arranged to ensure that the wedge moves in a linear fashion between the unlocked and locked positions.

2. An apparatus (20) for attaching a steering wheel to a steering column (50) as recited in Claim 1 wherein said wedge (32) further comprises a fastener securing said wedge to said steering wheel armature (22) when said wedge is at said locked position.

3. An apparatus (20) for attaching a steering wheel to a steering column (50) as recited in Claim 2 wherein said fastener comprises a bolt (84) securing said wedge (32) to said steering wheel armature (22) when said wedge is at said locked position.

4. An apparatus for (20) attaching a steering wheel to a steering column (50) as recited in Claim 1 wherein said steering wheel armature (22) further comprises a wedge bracket (28) aligned over said collar (24), said bracket (28) forming said wedge guide and said wedge (32) being receivable between said steering wheel armature and said wedge bracket; and said wedge receivable between said wedge bracket and a steering column, said wedge and said wedge bracket being adapted to cooperatively disengage said wedge lock when said wedge is received between said wedge bracket and a steering column.

5. An apparatus (20) for attaching a steering wheel to a steering column (50) as recited in Claim 1 wherein said collar (24) includes an index surface adapted to orient said steering wheel armature (22) relative to a steering column; and said collar includes at least a first antirotation mechanism adapted to receive a second antirotation mechanism located on a steering column.

6. An apparatus (20) for attaching a steering wheel to a steering column (50) as recited in Claim 5 wherein said first antirotation mechanism comprises one of a plurality of splines (106) and a plurality of keyways (114) adapted to receive said plurality of splines and said second antirotation mechanism comprises the other of said plurality of splines and said plurality of keyways.

7. An apparatus (20) for attaching a steering wheel to a steering column (50) as recited in Claim 1 wherein said wedge (32) includes an aperture (26) connected to said slot and adapted to receive a steering column.

8. An apparatus (20) for attaching a steering wheel to a steering column (50) as recited in Claim I further comprising a drive bracket (82) and a drive bolt (84); said drive bracket connected to said steering wheel armature (22) and receiving said drive bolt; said drive bolt received in a threaded aperture (26) in said wedge (32); and
rotation of said drive bolt moving said wedge between said unlocked position and said locked position.

9. An apparatus (20) for attaching a steering wheel to a steering column (50) as recited in Claim 1 further comprising a steering column; said steering column including a tapered portion (102), a slot portion (108) and a flange (110) adjacent said slot portion; said slot portion received in said slot, said ramped portion (38) contacting said flange; and said tapered portion (102) forming a wedge lock with said collar (24) when said wedge (32) is at said locked position.

10. An apparatus (20) for attaching a steering wheel to a steering column (50) as recited in Claim 9 wherein, said flange (110) includes a ramped surface (62) having a slope that is substantially the same as the slope of said ramped portion (38).

## Patentansprüche

1. Vorrichtung (20) für die Befestigung eines Lenkrades an einer Lenksäule (50), wobei die Vorrichtung aufweist:
eine Lenkradverankerung (22) mit einem Kragen (24), wobei der Kragen angepasst ist, um eine Lenksäule aufzunehmen; einen Keil (32) mit einem Schlitz (40) und einem abgeschrägten Abschnitt (38) benachbart dem Schlitz, wobei der Schlitz angepasst ist, um einen Schlitzabschnitt (108) einer Lenksäule aufzunehmen, wobei der abgeschrägte Abschnitt angepasst ist, um einen Flansch (110) an einer Lenksäule zu kontaktieren; wobei der Keil relativ zur Lenkradverankerung zwischen einer entriegelten Position und einer verriegelten Position beweglich ist; und
wobei der Keil angepasst ist, um ein Keilschloss zwischen dem Kragen und einer Lenksäule zu bilden, wenn sich der Keil in der verriegelten Position befindet, **dadurch gekennzeichnet, dass** die Vorrichtung außerdem eine Keilführung (78) aufweist, die angeordnet ist, um zu sichern, dass sich der Keil in einer linearen Weise zwischen der entriegelten und verriegelten Position bewegt.

2. Vorrichtung (20) für die Befestigung eines Lenkrades an einer Lenksäule (50) nach Anspruch 1, bei der der Keil (32) außerdem ein Befestigungselement aufweist, das den Keil an der Lenkradverankerung (22) sichert, wenn sich der Keil in der verriegelten Position befindet.

3. Vorrichtung (20) für die Befestigung eines Lenkrades an einer Lenksäule (50) nach Anspruch 2, bei der das Befestigungselement eine Schraube (84) aufweist, die den Keil (32) an der Lenkradverankerung (22) sichert, wenn sich der Keil in der verriegelten Position befindet.

4. Vorrichtung (20) für die Befestigung eines Lenkrades an einer Lenksäule (50) nach Anspruch 1, bei der die Lenkradverankerung (22) außerdem eine Keilhalterung (28) aufweist, die über dem Kragen (24) ausgerichtet ist, wobei die Halterung (28) die Keilführung bildet, und wobei der Keil (32) zwischen der Lenkradverankerung und der Keilhalterung aufgenommen werden kann, und wobei der Keil zwischen der Keilhalterung und einer Lenksäule aufgenommen werden kann, wobei der Keil und die Keilhalterung angepasst sind, um zusammenwirkend das Keilschloss zu lösen, wenn der Keil zwischen der Keilhalterung und einer Lenksäule aufgenommen wird.

5. Vorrichtung (20) für die Befestigung eines Lenkrades an einer Lenksäule (50) nach Anspruch 1, bei der der Kragen (24) eine Indexfläche umfasst, die angepasst ist, um die Lenkradverankerung (22) relativ zu einer Lenksäule auszurichten, und wobei der Kragen mindestens einen ersten Antirotationsmechanismus umfasst, der angepasst ist, um einen zweiten Antirotationsmechanismus aufzunehmen, der an einer Lenksäule angeordnet ist.

6. Vorrichtung (20) für die Befestigung eines Lenkrades an einer Lenksäule (50) nach Anspruch 5, bei der der erste Antirotationsmechanismus eine von einer Vielzahl von Keilen (106) und einer Vielzahl von Keilnuten (114) aufweist, die so angepasst sind, dass sie die Vielzahl von Keilen aufnehmen, und wobei der zweite Antirotationsmechanismus die andere der Vielzahl von Keilen und der Vielzahl von Keilnuten aufweist.

7. Vorrichtung (20) für die Befestigung eines Lenkrades an einer Lenksäule (50) nach Anspruch 1, bei der der Keil (32) eine Öffnung (26) umfasst, die mit dem Schlitz verbunden und angepasst ist, um eine Lenksäule aufzunehmen.

8. Vorrichtung (20) für die Befestigung eines Lenkrades an einer Lenksäule (50) nach Anspruch 1, die außerdem eine Antriebshalterung (82) und eine Antriebsschraube (84) aufweist, wobei die Antriebshalterung mit der Lenkradverankerung (22) verbunden ist und die Antriebsschraube aufnimmt, wobei die Antriebsschraube in einer Gewindeöffnung (26) im Keil (32) aufgenommen wird, und
wobei die Drehung der Antriebsschraube den Keil zwischen der entriegelten Position und der verriegelten Position bewegt.

9. Vorrichtung (20) für die Befestigung eines Lenkrades an einer Lenksäule (50) nach Anspruch 1, die außerdem eine Lenksäule umfasst, wobei die Lenksäule einen sich verjüngenden Abschnitt (102), einen Schlitzabschnitt (108) und einen Flanschabschnitt (110) benachbart dem Schlitzabschnitt aufweist, wobei der Schlitzabschnitt im Schlitz aufgenommen wird, der abgeschrägte Abschnitt (38) den Flansch kontaktiert und der sich verjüngende Abschnitt (102) ein Keilschloss mit dem Kragen (24) bildet, wenn sich der Keil (32) in der verriegelten Position befindet.

10. Vorrichtung (20) für die Befestigung eines Lenkrades an einer Lenksäule (50) nach Anspruch 9, bei der der Flansch (110) eine abgeschrägte Fläche (62) mit einer Neigung umfasst, die im Wesentlichen die gleiche ist wie die Neigung des abgeschrägten Abschnittes (38).

## Revendications

1. Dispositif (20) pour fixer un volant de direction sur une colonne de direction (50), ledit dispositif comprenant :
une armature du volant de direction (22), comportant un collier (24), ledit collier étant adapté pour recevoir une colonne de direction ; une cale (32) comportant une fente (40) et une partie en rampe (38) adjacente à ladite fente, ladite fente étant adaptée pour recevoir une partie de fente (108) d'une colonne de direction, ladite partie en rampe étant adaptée pour contacter une bride sur une colonne de direction ;
ladite cale pouvant se déplacer par rapport à ladite armature du volant de direction entre une position non verrouillée et une position verrouillée ; et
ladite cale étant adaptée pour établir un verrouillage par calage entre ledit collier et une colonne de direction lorsque ladite cale se trouve dans ladite position verrouillée, **caractérisé en ce que** le dispositif comprend en outre un guide de cale (78) destiné à assurer le déplacement linéaire de la cale entre les positions non verrouillée et verrouillée.

2. Dispositif (20) pour fixer un volant de direction sur une colonne de direction (50) selon la revendication 1, dans lequel ladite cale (32) comprend en outre un élément de fixation fixant ladite cale sur ladite armature du volant de direction (22) lorsque ladite cale est agencée dans ladite position verrouillée.

3. Dispositif (20) pour fixer un volant de direction sur une colonne de direction (50) selon la revendication 2, dans lequel ledit élément de fixation est constitué par un boulon (84) fixant ladite cale (32) sur ladite armature du volant de direction (22), lorsque ladite cale est agencée dans ladite position verrouillée.

4. Dispositif (20) pour fixer un volant de direction sur une colonne de direction (50) selon la revendication 1, dans lequel ladite armature du volant de direction (22) comprend en outre une console de calage (28) alignée au-dessus dudit collier (24), ladite console (28) constituant ledit guide de cale et ladite cale (32) pouvant être reçue entre ladite armature du volant de direction et ladite console de calage ; ladite cale pouvant être reçue entre ladite console de calage et une colonne de direction, ladite cale et ladite console de calage étant adaptées pour dégager par coopération ledit verrouillage par calage lorsque ladite cale est reçue entre ladite console de calage et une colonne de direction.

5. Dispositif (20) pour fixer un volant de direction sur une colonne de direction (50) selon la revendication 1, dans lequel ledit collier (24) englobe une surface d'indexation adaptée pour orienter ladite armature du volant de direction (22) par rapport à une colonne de direction ; ledit collier englobant au moins un premier mécanisme anti-rotation adapté pour recevoir un deuxième mécanisme anti-rotation agencé sur une colonne de direction.

6. Dispositif (20) pour fixer un volant de direction sur une colonne de direction (50) selon la revendication 5, dans lequel ledit premier mécanisme anti-rotation comprend un type d'éléments, plusieurs cannelures (106) ou plusieurs rainures de clavette (114) adaptées pour recevoir lesdites plusieurs cannelures, ledit deuxième mécanisme anti-rotation comprenant l'autre type d'éléments, lesdites plusieurs cannelures ou lesdites plusieurs rainures de clavette.

7. Dispositif (20) pour fixer un volant de direction sur une colonne de direction (50) selon la revendication 1, dans lequel ladite cale (32) englobe une ouverture (26) connectée à ladite fente et adaptée pour recevoir une colonne de direction.

8. Dispositif (20) pour fixer un volant de direction sur une colonne de direction (50) selon la revendication 1, comprenant en outre une console d'entraînement (82) et un boulon d'entraînement (84) ; ladite console d'entraînement étant connectée à ladite armature du volant de direction (122) et recevant ledit boulon d'entraînement ; ledit boulon d'entraînement étant reçu dans une ouverture filetée (26) dans ladite cale (32) ; et
la rotation dudit boulon d'entraînement entraînant le déplacement de ladite cale entre ladite position non verrouillée et ladite position verrouillée.

9. Dispositif (20) pour fixer un volant de direction sur une colonne de direction (50) selon la revendication 1, comprenant en outre une colonne de direction ; ladite colonne de direction englobant une partie effilée (102), une partie de fente (108) et une bride (110) adjacente à ladite partie de fente ; ladite partie de fente étant reçue dans ladite fente, ladite partie en rampe (38) contactant ladite bride ; et ladite partie effilée (102) établissant un verrouillage par calage avec ledit collier (24) lorsque ladite cale (32) est agencée dans ladite position verrouillée.

10. Dispositif (20) pour fixer un volant de direction sur une colonne de direction (50) selon la revendication 9, dans lequel ladite bride (110) englobe une surface en rampe (62) ayant une inclinaison pratiquement identique à l'inclinaison de ladite partie en rampe (38).
